# EUROPÄISCHE PATENTSCHRIFT

(11) **EP 1 073 934 B1**
(45) Veröffentlichungstag und Bekanntmachung des Hinweises auf die Patenterteilung: **12.07.2006**
(21) Anmeldenummer: 00907491.5
(22) Anmeldetag: 31.01.2000
(51) Int. Cl.: G03B 21/00, G09F 13/24

(54) **PROJEKTIONSLEUCHTE ZUR PROJEKTION FARBIGER LICHTEFFEKTE**
PROJECTION LAMP FOR THE PROJECTION OF COLORED LIGHT EFFECTS
LAMPE DE PROJECTION POUR LA PROJECTION D'EFFETS LUMINEUX COLORES

(30) Priorität: 29.01.1999 DE 29901468 U; 08.12.1999 DE 19959149
(43) Veröffentlichungstag der Anmeldung: 07.02.2001
(73) Patentinhaber: Strobl, Matthias, 33739 Bielefeld (DE)
(72) Erfinder: Strobl, Matthias, 33739 Bielefeld (DE)
(74) Vertreter: TER MEER - STEINMEISTER & PARTNER GbR
(86) Internationale Anmeldenummer: PCT/EP2000/000767
(87) Internationale Veröffentlichungsnummer: WO 2000/045219

(56) Entgegenhaltungen:
- FR-A- 2 571 153
- US-A- 1 795 128
- PATENT ABSTRACTS OF JAPAN vol. 1996, no. 8, 30. August 1996 (1996-08-30) & JP 08 095510 A (SUNPOT CO.LTD.), 12. April 1996 (1996-04-12)
- PATENT ABSTRACTS OF JAPAN vol. 1998, no. 10, 31. August 1998 (1998-08-31) & JP 10 133610 A (TOKYO AQUA ART:KK), 22. Mai 1998 (1998-05-22)

## Beschreibung

Die vorliegende Erfindung betrifft eine Projektionsleuchte zur Projektion farbiger Lichteffekte gemäß dem Oberbegriff des Anspruchs 1.

Projektionsleuchten dieser Art werden zur Dekoration im Wohnbereich oder auch in Diskotheken oder dergleichen verwendet. Mit den Leuchten lassen sich farbige, sich ständig in unvorhersehbarer Weise verändernde Lichtmuster auf eine Fläche des Raumes projizieren. Diese Farbmuster werden durch eine Emulsion erzeugt, die in einen transparenten Behälter gefüllt ist, der im Strahlengang der Lichtquelle der Projektionsleuchte angeordnet ist. Die Emulsion umfaßt mindestens zwei unterschiedlich gefärbte Emulsionskomponenten, wie etwa Wasser und Öl, die keine chemische Verbindung miteinander eingehen, so daß die Komponenten stets durch Grenzflächen voneinander getrennt sind.

Lichtprojektionen finden beispielsweise auch in der Farbtherapie Verwendung. Hier ist die Wahl der Farben und die Gestalt der erzeugten Muster von entscheidender Bedeutung. Es ist daher erwünscht, die Farben und Muster der Projektion verändern zu können. Wegen der besseren Handhabbarkeit sind die Behälter der bekannten Leuchten jedoch geschlossen, und zum Ändern der Farbkombination muß der Behälter komplett ausgetauscht werden. Außerdem ist es bei den bekannten Projektionsleuchten nicht möglich, die Bewegung der Emulsion und das Fließen und Verschmelzen der Öltropfen im Wasser zu beeinflussen. Das Aussehen der Farbmuster ist ferner von den Volumenanteilen der Emulsionskomponenten abhängig, die sich ebenfalls nicht verändern lassen, da die geschlossenen Behälter nicht zum Nachfüllen von Flüssigkeit vorgesehen sind. Schließlich kann es erwünscht sein, der Emulsion feste Partikel, kleine Gegenstände oder dergleichen hinzuzufügen, die ebenfalls Lichteffekte verursachen.

Aufgabe der Erfindung ist es daher, eine Projektionsleuchte der eingangs genannten Art zu schaffen, deren Lichteffekte sich vom Benutzer in einfacher Art und Weise beeinflussen lassen.

Diese Aufgabe wird erfindungsgemäß durch eine Projektionsleuchte gemäß dem kennzeichnenden Teil des Anspruchs 1 gelöst.

Der transparente Behälter der erfindungsgemäßen Projektionsleuchte ist als offene, gewölbte Schale ausgebildet, in die die Emulsion eingefüllt wird. Die Lichtquelle ist in diesem Fall auf solche Weise unter oder über der Schale angeordnet, daß sie durch die Emulsion hindurchstrahlt und eine Projektion des Inhalts der Schale auf einer Projektionsfläche erzeugt. Besonders zweckmäßig ist es, die Lichtquelle unterhalb der Schale anzubringen und den Schaleninhalt auf die Raumdecke zu projizieren. Durch die gewölbte Form der Schale und die plane Flüssigkeitsoberfläche der Emulsion bildet die Schale eine plan-konvexe Linse, die eine Abbildung der Schlieren der Emulsion erzeugt.Denkbar ist ferner, das Licht schräg von oben auf die Flüssigkeitsoberfläche fallen zu lassen, so daß es teilweise am Schalenboden reflektiert wird und schräg nach oben aus der Schale austritt. Die Projektion erfolgt bei dieser Anordnung auf eine Fläche, die der Lichtquelle in bezug auf die Schale im wesentlichen gegenüberliegt.

Zur Erzeugung sich ständig verändernder Lichteffekte wird die Emulsion durch einen Erreger in Bewegung gehalten, der vom Benutzer der Projektionsleuchte gesteuert werden kann. Zweckmäßigerweise ist dieser Erreger am Rand der Schale angebracht und taucht in die Emulsion ein oder berührt zumindest die Flüssigkeitsoberfläche.

Insbesondere hat der Benutzer jedoch die Möglichkeit, die Emulsion in der Schale vollständig gegen eine andere mit anderen Farben auszutauschen. Flüssigkeitskomponenten nachzufüllen oder Partikel oder Gegenstände hinzuzufügen, die ihrerseits Lichteffekte verursachen.

Erfindungsgemäß kann der Erreger wahlweise als Rührwerk oder als Vibrationserreger, insbesondere als Ultraschallerreger ausgebildet sein. Beispielsweise ist es möglich, den Rand der Schale selbst in Schwingungen zu versetzen, die sich auf die Flüssigkeit übertragen.

In einer weiteren Ausführungsform handelt es sich bei dem Erreger um ein Gebläse, das Luftblasen in die Emulsion einbläst oder die Flüssigkeit in leichte Bewegung versetzt.

Vorzugsweise ist die Projektionsleuchte mit einer Einfüllvorrichtung zum automatischen Ein- bzw. Nachfüllen von Emulsionskomponenten versehen. Beispielsweise läßt sich während des Betriebes der Leuchte tropfenweise oder mit geringem Zulauf Öl aus einem Tank in die Schale nachfüllen, so daß sich die Lichteffekte verändern. Der Zulauf ist zweckmäßigerweise durch den Benutzer steuerbar.

Zur Veränderung der Projektionseigenschaften der Leuchte ist in einer Ausführungsform der Erfindung der Abstand der Lichtquelle von der Schale einstellbar. Gemäß einer weiteren Ausführungsform ist zwischen der Lichtquelle und der Schale ein Farbfilter angeordnet, das zusammen mit den Farben der Emulsionskomponenten Mischfarben in der Projektionsabbildung erzeugt.

In einer weiteren bevorzugten Ausführungsform ist im Strahlengang der Projektion, also je nach Anordnung der Lichtquelle über oder unter der Schale, eine Korrekturlinse wie beispielsweise eine Fresnel-Linse angeordnet, die zur Einstellung der Schärfe der Projektionsabbildung höhenverstellbar ist.

Die Projektion muß nicht notwendigerweise auf der Raumdecke erfolgen, sondern bei Anbringung der Lichtquelle oberhalb der Schale auch auf dem Fußboden. In einer bevorzugten Ausführungsform befindet sich auf der Seite der Schale, die der Lichtquelle gegenüberliegt, ein geneigter Spiegel, der die Projektionsrichtung seitlich ablenkt, so daß das Bild seitlich auf eine Raumwand oder einen Projektionsschirm geworfen werden kann. Zweckmäßigerweise liegt der Neigungswinkel des Spiegels in diesem Fall bei etwa 45°.

Eine weitere erfindungsgemäße Ausführungsform sieht einen semitransparenten Projektionsschirm, wie etwa eine Milchglasscheibe vor, die im Strahlengang der Projektion angeordnet ist. Wird die Abbildung z.B. von unten auf den Projektionsschirm geworfen, läßt sie sich auf der gegenüberliegenden Oberseite betrachten. Diese Ausführungsform ist insbesondere als Tischkonstruktion sinnvoll, wobei der Projektionsschirm in die Tischplatte integriert wird und die übrigen Komponenten der Projektionsleuchte sich unterhalb der Tischplatte befinden. Der Betrachter kann in diesem Fall beispielsweise am Tisch sitzend das projizierte Bild betrachten.

Im folgenden wird eine bevorzugte Ausführungsform der Erfindung anhand der Zeichnung näher erläutert.

Die einzige Figur zeigt eine schematische Seitenansicht der erfindungsgemäßen Projektionsleuchte.

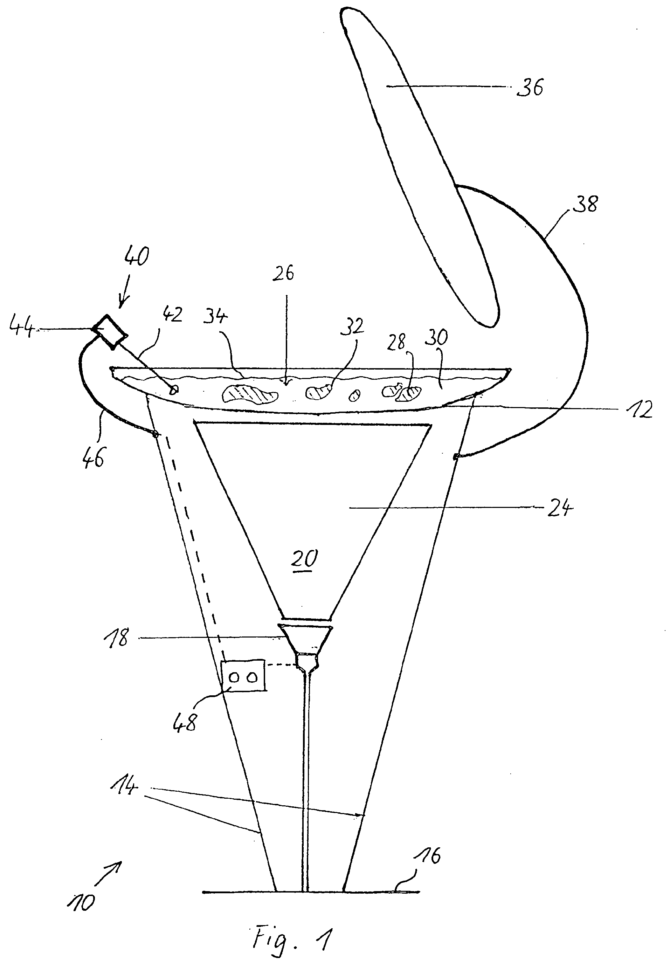

Die erfindungsgemäße Projektionsleuchte 10 in Fig. 1 umfaßt eine flache, gewölbte Schale 12, die auf dem oberen Rand einer Halterung 14 aufliegt. Die Halterung 14 weist an ihrer Unterseite einen flachen Fuß 16 zur Aufstellung auf dem Raumboden, einem Tisch oder dergleichen auf. Innerhalb der Halterung 14 ist eine Lichtquelle 18 unterhalb der Schale 12 angeordnet. Bei der Lichtquelle 18 handelt es sich im wesentlichen um einen Strahler, dessen Strahlenkegel 20 nach oben gerichtet ist, so daß die transparente Schale 12 durchleuchtet wird. Die Lichtquelle 18 ist über eine elektrische Zuleitung 22 auf nicht dargestellte Weise an ein Stromnetz angeschlossen. Damit kein Streulicht von der Lichtquelle 18 seitlich aus der Projektionsleuchte 10 austreten kann, wird der Lichtkegel 20 der Lichtquelle 18 durch eine kegelförmige Blende 24 abgeschirmt.

Die Schale 12 ist mit einer Emulsion 26 aus Wasser 28 und Öl 30 gefüllt. Da das Wasser 28 und das Öl 30 keine chemische Verbindung miteinander eingehen, sind die beiden Emulsionskomponenten 28,30 stets durch Grenzschichten getrennt, die in Fig. 1 beispielhaft mit 32 bezeichnet sind. Das Wasser 28 und das Öl 30 sind mit unterschiedlichen Farben, wie beispielsweise Gelb und Rot eingefärbt. Durch den Strahlenkegel 24 der Lichtquelle 18 wird die Emulsion 26 durchstrahlt. Durch die plane Flüssigkeitsoberfläche 34 der Emulsion 26 und die gewölbte Unterseite der Schale 12 bildet die Emulsion 26 eine plan-konvexe Linse, durch die der Schaleninhalt auf eine Ebene oberhalb der Schale 12 abgebildet wird.

Auf diese Weise ist es möglich, den Inhalt der Schale 12 beispielsweise auf einer nicht gezeigten Raumdecke abzubilden. In der in Fig. 1 gezeigten Ausführungsform ist die Projektionsleuchte 10 jedoch mit einem Spiegel 36 versehen, der durch einen flexiblen Arm 38 verstellbar an der Halterung 14 angebracht ist und um etwa 45° geneigt über der Schale 12 angeordnet ist, so daß die Projektion umgelenkt wird und die Abbildung seitlich, also in Fig. 1 nach links, auf eine Raumwand oder einen senkrechten Projektionsschirm geworfen werden kann.

Am Rand der Schale 12 ist ein Erreger 40 angebracht, der die Emulsion 26 in Bewegung setzt und für eine ständige Mischung der Emulsionkomponenten 28,30 und eine Bewegung der Grenzflächen 32 sorgt. Es handelt sich dabei um ein Rührwerk mit einer Welle 42, die durch einen Motor 44 angetrieben wird und mit ihrem freien Ende in die Emulsion 26 eintaucht. Das Gehäuse des Motors 44 ist durch einen Arm 46 mit der Halterung 14 der Projektionsleuchte 10 verbunden. Innerhalb des Arms 46 verläuft auch die Stromversorgung des Motors 44. Die Projektionsleuchte 10 ist ferner mit einer Steuereinrichtung 48 versehen, durch die ein Benutzer die Intensität der Lichtquelle 18 und die Rotationsgeschwindigkeit des Motors 44 steuern kann.

In äquivalenter Weise läßt sich die Projektionsrichtung umkehren, indem die Lichtquelle 18 auf nicht gezeigte Weise oberhalb der Schale 12 angebracht wird, so daß ihr Lichtkegel 24 nach unten gerichtet ist, während der Spiegel 36 zur seitlichen Ablenkung der Projektion in diesem Fall unterhalb der Schale 12 vorzusehen ist.

## Patentansprüche

1. Projektionsleuchte (10) zur Projektion farbiger Lichteffekte, mit einer Lichtquelle (18) und einem im Strahlengang der Lichtquelle (18) angeordneten transparenten Behälter (12), der mit einer Emulsion (26) mit unterschiedlich gefärbten Emulsionskomponenten (28,30) gefüllt ist, **dadurch gekennzeichnet, daß** der Behälter (12) als offene, gewölbte Schale ausgebildet ist, daß die Lichtquelle (18) zur Projektion des Schaleninhalts auf eine Projektionsfläche unter oder über der Schale (12) angeordnet ist, und daß die Projektionsleuchte (10) einen Erreger (40) zum Bewegen und Durchmischen der Emulsion (26) umfaßt.

2. Projektionsleuchte (10) nach Anspruch 1, **dadurch gekennzeichnet, daß** der Erreger (40) als Rührwerk ausgebildet ist.

3. Projektionsleuchte (10) nach Anspruch 1, **dadurch gekennzeichnet, daß** der Erreger (40) als Vibrationserreger ausgebildet ist.

4. Projektionsleuchte (10) nach Anspruch 3, **dadurch gekennzeichnet, daß** der Erreger (40) als Ultraschallerreger ausgebildet ist.

5. Projektionsleuchte (10) nach Anspruch 1, **dadurch gekennzeichnet, daß** der Erreger (40) als Gebläse ausgebildet ist.

6. Projektionsleuchte (10) nach einem der vorhergehenden Ansprüche, **gekennzeichnet durch** eine Einfüllvorrichtung zum automatischen Einfüllen zumindest einer Emulsionskomponente (28,30) in die Schale (12).

7. Projektionsleuchte (10) nach einem der vorhergehenden Ansprüche, **dadurch gekennzeichnet, daß** der Abstand der Lichtquelle (18) von der Schale (12) einstellbar ist.

8. Projektionsleuchte (10) nach einem der vorhergehenden Ansprüche, **dadurch gekennzeichnet, daß** zwischen der Lichtquelle (18) und der Schale (12) ein Farbfilter angeordnet ist.

9. Projektionsleuchte (10) nach einem der vorhergehenden Ansprüche, **gekennzeichnet durch** eine im Strahlengang der Projektion verstellbar angeordnete Korrekturlinse.

10. Projektionsleuchte (10) nach einem der vorhergehenden Ansprüche, **gekennzeichnet durch** einen Spiegel (36) zum Umlenken der Projektionsrichtung, der auf der Seite der Schale (12), die der Lichtquelle gegenüberliegt, geneigt angeordnet ist.

11. Projektionsleuchte (10) nach einem der vorhergehenden Ansprüche, **gekennzeichnet durch** einen im Projektionsstrahlengang angeordneten, semitransparenten Projektionsschirm.

## Claims

1. A projection lamp for projecting coloured light effects, comprising:
a light source (18), a transparent container (12), disposed in a beam path of the light source (18) and filled with an emulsion with differently coloured emulsion components,
**characterized in that** the container (12) is constructed as an open arched dish, the light source (18) projecting the contents of the dish onto a projection surface being disposed below or above the dish (12), an exciter (40) for moving and mixing the emulsion being associated to the projection lamp.

2. A projection lamp of claim 1, **characterized in that** the exciter (40) includes a stirrer.

3. A projection lamp of claim 1, **characterized in that** the exciter (40) includes a vibration generator.

4. A projection lamp of claim 3, **characterized in that** the exciter (40) includes an ultrasonic generator.

5. A projection lamp of claim 1, **characterized in that** the exciter (40) includes a blower.

6. A projection lamp of claim 1, **characterized by** a filling device for automatically filling at least one of the emulsion components into the dish.

7. A projection lamp of claim 1, **characterized in that** the distance of the light source from the dish is variable.

8. A projection lamp of claim 1, **characterized by** a color filter disposed between the light source and the dish.

9. A projection lamp of claim 1, **characterized by** a correcting lens disposed adjustably in the beam path of a projection from the light source.

10. A projection lamp of claim 1, **characterized by** a mirror for deflecting the direction of a projection from the light source, disposed in an inclined manner on a side of the dish, opposite the light source.

11. A projection lamp of claim 1, **characterized by** a semitransparent projection screen disposed in the beam path that is projected.

## Revendications

1. Lampe de projection (10) pour la projection d'effets lumineux colorés, avec une source de lumière (18) et un récipient transparent (20) disposé dans le trajet du faisceau de la source de lumière (18), qui est rempli d'une émulsion (26) avec des composants d'émulsion (28, 30) de différentes couleurs, **caractérisée en ce que** le récipient (12) est réalisé en tant que coquille ouverte, arquée, que la source de lumière (18) est disposée au dessous ou au dessus de la coquille (12) pour la projection du contenu de la coquille sur une surface de projection, et que la lampe de projection (10) comporte un excitateur (40) pour agiter et mélanger l'émulsion (26).

2. Lampe de projection (10) selon la revendication 1, **caractérisée en ce que** l'excitateur (40) est réalisé en tant qu'agitateur.

3. Lampe de projection (10) selon la revendication 1, **caractérisée en ce que** l'excitateur (40) est réalisé en tant qu'excitateur de vibrations.

4. Lampe de projection (10) selon la revendication 1, **caractérisée en ce que** l'excitateur (40) est réalisé en tant qu'excitateur d'ultrasons.

5. Lampe de projection (10) selon la revendication 1, **caractérisée en ce que** l'excitateur (40) est réalisé en tant que soufflante.

6. Lampe de projection (10) selon l'une des revendications précédentes, **caractérisée par** un dispositif de remplissage pour le remplissage automatique d'au moins un composant d'émulsion (28, 30) dans la coquille (12).

7. Lampe de projection (10) selon l'une des revendications précédentes, **caractérisée en ce que** la distance entre la source de lumière (18) et la coquille (12) est réglable.

8. Lampe de projection (10) selon l'une des revendications précédentes, **caractérisée en ce qu'**un filtre coloré est disposé entre la source de lumière (18) et la coquille (12).

9. Lampe de projection (10) selon l'une des revendications précédentes, **caractérisée par** une lentille correctrice disposée dans le trajet de faisceau de la projection.

10. Lampe de projection (10) selon l'une des revendications précédentes, **caractérisée par** un miroir (36) pour dévier la direction de projection, qui est disposé incliné sur le côté de la coquille (12) opposé à la source de lumière.

11. Lampe de projection (10) selon l'une des revendications précédentes, **caractérisée par** un écran de projection semi-transparent disposé dans le trajet de faisceau de projection.
